# EUROPÄISCHE PATENTSCHRIFT

(11) **EP 2 847 549 B1**
(45) Veröffentlichungstag und Bekanntmachung des Hinweises auf die Patenterteilung: **01.12.2021**
(21) Anmeldenummer: 13719862.8
(22) Anmeldetag: 02.05.2013
(51) Int. Cl.: G01D 21/00

(54) **MESSSYSTEM UND DATENVERARBEITUNGSINFRASTRUKTUR**
MEASURING SYSTEM AND DATA PROCESSING INFRASTRUCTURE
SYSTÈME DE MESURE ET INFRASTRUCTURE DE TRAITEMENT DE DONNÉES

(30) Priorität: 08.05.2012 DE 102012207597
(43) Veröffentlichungstag der Anmeldung: 18.03.2015
(73) Patentinhaber: Mueller-BBM Vibroakustik Systeme GmbH, 82152 Planegg (DE)
(72) Erfinder: HOBELSBERGER, Josef, 80638 München (DE)
(74) Vertreter: Isarpatent
(86) Internationale Anmeldenummer: PCT/EP2013/059158
(87) Internationale Veröffentlichungsnummer: WO 2013/167464

(56) Entgegenhaltungen:
- DE-A1-102009 040 382
- US-A1- 2008 208 367
- US-A1- 2010 080 175
- MADOKA YURIYAMA ET AL: "Sensor-Cloud Infrastructure - Physical Sensor Management with Virtualized Sensors on Cloud Computing", NETWORK-BASED INFORMATION SYSTEMS (NBIS), 2010 13TH INTERNATIONAL CONFERENCE ON, IEEE, PISCATAWAY, NJ, USA, 14 September 2010 (2010-09-14), pages 1-8, XP031801447, ISBN: 978-1-4244-8053-1

## Beschreibung

### GEBIET DER ERFINDUNG

Die vorliegende Erfindung betrifft ein Messsystem zum Erfassen von Messdaten, insbesondere zum Erfassen von Messdaten in einem Fahrzeug. Ferner betrifft die vorliegende Erfindung eine Datenverarbeitungsinfrastruktur.

### TECHNISCHER HINTERGRUND

Systeme zur Erfassung von Daten, insbesondere von Messdaten, werden heute in einer Vielzahl von Anwendung eingesetzt. Beispielsweise können Systeme zur Erfassung von Messdaten in der Entwicklung von Kraftfahrzeugen, Flugzeugen oder dergleichen eingesetzt werden. Dabei werden üblicherweise Sensoren zur Erfassung von Messdaten mit einem Speicher gekoppelt, welcher die von den Sensoren erfassten Messdaten speichert. Beispielsweise können in der Fahrzeugentwicklung hochgenaue Beschleunigungssensoren und Drehbewegungssensoren als Referenzsensoren die Entwicklung von elektronischen Systemen zur Fahrzeugstabilisierung (z.B. ESP-Systemen) unterstützen. Dabei werden sowohl die Daten der Sensoren des elektronischen Systems als auch die Daten der Referenzsensoren aufgenommen und in dem Speicher gespeichert.

Heute verwendete Erfassungseinheiten speichern die Daten der Systemsensoren und der Referenzsensoren üblicherweise zur späteren Verarbeitung. Solche Erfassungseinheiten speichern die Daten z.B. auf einer SD-Speicherkarte oder einer Festplatte und leiten diese über einen USB-Anschluss an einen PC weiter.

Üblicherweise sind solche Erfassungseinheiten auch an die jeweilige Messaufgabe angepasst und weisen die für die jeweilige Messaufgabe geeigneten Sensoranschlüsse auf. Z.B. kann eine Erfassungseinheit Anschlüsse für Beschleunigungs- und Bewegungssensoren aufweisen, wenn diese zur Entwicklung von Stabilitätssystemen in einem Fahrzeug eingesetzt wird. Eine Erfassungseinheit kann aber z.B. auch Anschlüsse für Schwingungs- und Schallsensoren aufweisen, wenn die Erfassungseinheit in der Optimierung von Fahrzeuggeräuschen und oder Schwingungseigenschaften zum Einsatz kommt.

Zur weiteren Verarbeitung der Messdaten werden diese üblicherweise auf einen Computer, z.B. einen Windows-PC, übertragen und dort mittels geeigneter Software-Systeme ausgewertet. Dabei existieren für die unterschiedlichen Messaufgaben üblicherweise unterschiedliche Software-Systeme, welche die Auswertung der Messdaten durchführen. Eine einheitliche Auswertung der zu unterschiedlichen Messaufgaben aufgenommenen Messdaten ist nicht vorgesehen.

Das Dokument :"Sensor-Cloud Infrastructure - Physical Sensor Management with Virtualized Sensors on Cloud Computing" von MADOKA YURIYAMA ET AL offenbart ein Messsystem gemäß dem Stand der Technik.

### ZUSAMMENFASSUNG DER ERFINDUNG

Vor diesem Hintergrund ist es eine Aufgabe der vorliegenden Erfindung, eine einfachere Erfassung und Bearbeitung und Analyse von Messdaten zu ermöglichen.

Diese Aufgabe wird erfindungsgemäß durch ein Messsystem und durch ein Datenverarbeitungssystem mit den Merkmalen der unabhängigen Patentansprüche gelöst.

Exemplarische Ausführungsbeispiele umfassen:
- Ein Messsystem zum Erfassen von Messdaten, insbesondere zum Erfassen von Messdaten in einem Fahrzeug, mit einer Messvorrichtung, welche aufweist: eine erste Netzwerkschnittstelle, welche zumindest dazu ausgebildet ist, das Messsystem mit einer Datenverarbeitungsinfrastruktur zu koppeln, und eine erste Koppeleinrichtung, welche dazu ausgebildet ist, das Messsystem bei Bestehen einer Kopplung mit der Datenverarbeitungsinfrastruktur intransparent als Komponente der Datenverarbeitungsinfrastruktur an diese zu koppeln und/oder die Messvorrichtung über die erste Netzwerkschnittstelle mit einer weiteren Messvorrichtung intransparent zu einer einzelnen gekoppelten Messvorrichtung zu koppeln.
- Eine Datenverarbeitungsinfrastruktur, mit mindestens zwei Recheneinrichtungen, welche jeweils eine zweite Netzwerkschnittstelle aufweisen, wobei die zweite Netzwerkschnittstelle dazu ausgebildet ist, die Recheneinrichtungen miteinander zu koppeln, mit einer zweiten Koppeleinrichtung, welche dazu ausgebildet ist, die Recheneinrichtungen intransparent zu einer gekoppelten Recheneinrichtung zu koppeln, mit einer Kommunikationsschnittstelle, welche dazu ausgebildet ist, die gekoppelte Recheneinrichtung mit mindestens einem erfindungsgemäßen Messsystem zu koppeln, und mit einer zweiten Steuereinrichtung, welche dazu ausgebildet ist, beim Koppeln eines Messsystems mit der Datenverarbeitungsinfrastruktur das Messsystem automatisch zu identifizieren und/oder zu authentisieren.

Die der vorliegenden Erfindung zu Grunde liegende Erkenntnis besteht darin, dass in bisherigen Messsystemen unterschiedliche Messaufgaben nicht einheitlich gelöst werden. Die der vorliegenden Erfindung zu Grunde liegende Idee besteht nun darin, dieser Erkenntnis Rechnung zu tragen und eine Möglichkeit vorzusehen, unterschiedliche Messaufgaben einheitlich zu bearbeiten und die Ergebnisse der Messaufgaben einheitlich aufzubereiten und darzustellen.

Dazu sieht die vorliegende Erfindung eine Messvorrichtung vor, die sich mit einer bestehenden Datenverarbeitungsinfrastruktur verbinden kann. Dabei verbindet sich die Messvorrichtung mit der Datenverarbeitungsinfrastruktur intransparent für einen Benutzer derart, dass die Messvorrichtung als integraler Bestandteil der Datenverarbeitungsinfrastruktur erscheint.

Die erfindungsgemäße Messvorrichtung bildet mit der Datenverarbeitungsinfrastruktur einen Rechnerverbund, der heute z.B. als "digitale Cloud" bezeichnet wird. Ist vorgesehen, dass ein Element der Datenverarbeitungsinfrastruktur, z.B. eine Messvorrichtung, sich dynamisch mit der Datenverarbeitungsinfrastruktur verbinden und von dieser lösen kann, spricht man auch von einer "Ad-hoc Cloud". Dies ist zum Beispiel dann der Fall, wenn eine Messvorrichtung in einem Fahrzeug installiert ist, welches auf einer Erprobungsfahrt ist, während der keine Möglichkeit besteht, die Messvorrichtung über ein Datennetzwerk mit der Datenverarbeitungsinfrastruktur zu koppeln. Erstreckt sich eine solche Erprobungsfahr z.B. über mehrere Tage, ist eventuell am Abend eines Erprobungstags ein Netzwerkanschluss in einem Hotel verfügbar. Ein Entwickler kann dann z.B. am Ende eines Erprobungstages über den Netzwerkanschluss des Hotels die Verbindung zwischen der Messvorrichtung und der Datenverarbeitungsinfrastruktur herstellen.

Die Messvorrichtung ist dabei dazu ausgebildet, sich intransparent in die Datenverarbeitungsinfrastruktur zu integrieren. Dies bedeutet, dass ein Zugriff auf die Messvorrichtung nicht von einem Zugriff auf die Datenverarbeitungsinfrastruktur zu unterscheiden ist. Greift ein Benutzer auf eine solche Messvorrichtung oder eine solche Datenverarbeitungsinfrastruktur zu, ist für diesen Benutzer also nicht ersichtlich, ob er auf die einzelne Messvorrichtung oder die Datenverarbeitungsinfrastruktur zugreift.

Ferner sieht die vorliegende Erfindung vor, dass eine Messvorrichtung dazu in der Lage ist, sich mit weiteren Messvorrichtungen zu einer gekoppelten Messvorrichtung zu koppeln und sozusagen einen Verbund zu bilden und gemeinsam Messaufgaben zu bearbeiten. Dabei ist vorgesehen, dass die Messvorrichtungen untereinander derart intransparent vernetzt sind, dass ein Benutzer auf eine beliebige Messvorrichtung des Verbunds zugreifen kann und den Verbund dabei als eine einzelne Messvorrichtung wahrnimmt. In diesem Zusammenhang kann z.B. von einer "local Cloud" gesprochen werden. Mit Hilfe einer erfindungsgemäßen Koppelvorrichtung können so z.B. eine Vielzahl von Messvorrichtungen in einem Fahrzeug miteinander gekoppelt werden.

Schließlich sieht die vorliegende Erfindung eine Datenverarbeitungsinfrastruktur vor, welche mit einer oder mehreren erfindungsgemäßen Messvorrichtungen in Datenkommunikativer Verbindung gekoppelt werden kann. Dabei ist die Datenverarbeitungsinfrastruktur dazu ausgebildet, die Messvorrichtungen beim Koppeln mit der Datenverarbeitungsinfrastruktur zu identifizieren bzw. zu authentisieren. Dadurch kann sichergestellt werden, dass nur Messvorrichtungen, welche z.B. einer Firma gehören, welche die Datenverarbeitungsinfrastruktur betreibt, Zugriff auf die Datenverarbeitungsinfrastruktur erhalten.

Vorteilhafte Ausführungsformen und Weiterbildungen ergeben sich aus den Unteransprüchen sowie aus der Beschreibung unter Bezugnahme auf die Figuren.

In einer Ausführungsform weist die Messvorrichtung eine erste Steuereinrichtung auf, welche dazu ausgebildet ist, erfasste Messdaten bei bestehen einer Kopplung mit der Datenverarbeitungsinfrastruktur automatisch an die Datenverarbeitungsinfrastruktur zu übermittelt. Ein Zugriff auf die erfassten Daten wird dadurch für eine Vielzahl von Benutzern zeitnah zu der Erfassung der Daten möglich.

Zusätzlich oder alternativ ist die erste Steuereinrichtung dazu ausgebildet, bei bestehen einer Kopplung mit der Datenverarbeitungsinfrastruktur die erfassten Messdaten als Antwort auf eine Anfrage der Datenverarbeitungsinfrastruktur an die Datenverarbeitungsinfrastruktur zu übermitteln. Dies ermöglicht es, erfasste Daten sehr schnell in der Datenverarbeitungsinfrastruktur bereitzustellen. Ferner wird es möglich, Daten z.B. in festgelegten Zeitintervallen abzurufen. Ferner können in einer Datenerfassungseinrichtung erfasste Daten in einer einmaligen Übertragung, z.B. bei niedriger Netzwerkauslastung, an die Datenverarbeitungsinfrastruktur übertragen werden. Dies ermöglicht das Bereitstellen der erfassten Daten für eine Vielzahl von Benutzern ohne ein Datennetzwerk, welches die Datenverarbeitungsinfrastruktur mit Datenerfassungseinrichtungen koppelt dauerhaft zu belasten.

In einer Ausführungsform weist die Messvorrichtung eine Benutzerschnittstelle auf, welche dazu ausgebildet ist, einem Benutzer einen Zugriff auf die Messvorrichtung bereitzustellen. Die Benutzerschnittstelle kann z.B. als Touchscreen-Monitor, als Monitor kombiniert mit einer Maus und/oder Tastatur oder als Anwendungsschnittstelle bzw. Zugriffsschnittstelle, z.B. als Web-Interface, ausgebildet sein. Dadurch wird es möglich, sehr einfach auf die Messvorrichtung und damit auf die Datenverarbeitungsfunktionen bzw. der erfassten Messdaten zuzugreifen.

In einer Ausführungsform ist die Benutzerschnittstelle dazu ausgebildet, einem Benutzer Zugriff auf Datenverarbeitungsfunktionen der Messvorrichtung bereitzustellen, wobei die dem Benutzer bereitgestellten Datenverarbeitungsfunktionen mindestens eine Untermenge einer Menge von Datenverarbeitungsfunktionen darstellen, welche die Datenverarbeitungsinfrastruktur dem Benutzer bereitstellt. Dies ermöglicht es, einem Benutzer zumindest einen Teil derjenigen Datenverarbeitungsfunktionen bereitzustellen, die eine Datenverarbeitungsinfrastruktur einem Benutzer bereitstellen kann, auch wenn der Benutzer lediglich Zugriff auf eine Messvorrichtung hat. Insbesondere können dem Benutzer diejenigen Datenverarbeitungsfunktionen bereitgestellt werden, die der von der jeweiligen Messvorrichtung durchgeführten Messaufgabe entsprechen.

Beispielsweise kann eine solche Messaufgabe das Erfassen von akustischen - und schwingungstechnischen Größen an einem Fahrzeug-Antriebsstrang sein. Dem Benutzer können in solch einem Fall z.B. Datenverarbeitungsfunktionen bereitgestellt werden, welche die Visualisierung, hörbare Ausgabe, Frequenzanalyse oder dergleichen der erfassten akustischen - und schwingungstechnischen Größen ermöglichen.

Ferner wird es möglich, dass die jeweilige Messvorrichtung ohne eine Verbindung zu einer Datenverarbeitungsinfrastruktur, zumindest einen Teil der Datenverarbeitungsfunktionen selbständig berechnet und einem Benutzer die Ergebnisse der Berechnung zeitnah zur Verfügung stellt.

In einer Ausführungsform ist die Benutzerschnittstelle dazu ausgebildet, dem Benutzer bei bestehen einer Kopplung mit der Datenverarbeitungsinfrastruktur Zugriff auf alle Datenverarbeitungsfunktionen bereitzustellen, welche die Datenverarbeitungsinfrastruktur dem Benutzer bereitstellt, wobei die Benutzerschnittstelle dazu ausgebildet ist, für diejenigen Datenverarbeitungsfunktionen, welche nicht direkt auf der Messvorrichtung bereitgestellt werden, die Anfrage des Benutzers, insbesondere für den Benutzer intransparent, an die Datenverarbeitungsinfrastruktur weiterzuleiten und die Ergebnisse der entsprechenden Datenverarbeitungsfunktionen von der Datenverarbeitungsinfrastruktur zu erhalten und an den Benutzer weiterzuleiten. Dies ermöglicht es einem Benutzer, bei bestehender Kopplung zwischen der jeweiligen Messvorrichtung und der Datenverarbeitungsinfrastruktur auf alle Daten und Datenverarbeitungsfunktionen der Datenverarbeitungsinfrastruktur zuzugreifen. Dies ermöglicht es einem Benutzer ferner z.B. von ihm in einer Messaufgabe erfasste Messdaten mit den Messdaten anderer Benutzer oder mit von ihm in einer vorherigen Messung aufgenommenen Messdaten zu vergleichen. Ferner ermöglicht dies dem Benutzer die erfassten Messdaten mit anderen Messdaten zu verknüpfen um z.B. spezielle Analysen eines Fahrzeugs durchzuführen.

In einer Ausführungsform ist die Benutzerschnittstelle dazu ausgebildet, bei Kopplung der Messvorrichtung mit mindestens einer weiteren Messvorrichtung in der gekoppelten Messvorrichtung, einem Benutzer intransparent Zugriff auf alle durch die in der gekoppelten Messvorrichtung gekoppelten Messvorrichtungen bereitgestellten Datenverarbeitungsfunktionen bereitzustellen. Dies ermöglicht einen einfachen Zugriff auf alle in einer gekoppelten Messvorrichtung miteinander gekoppelten Messvorrichtungen, ohne dass ein Benutzer besondere Kenntnisse über die einzelnen Messvorrichtungen haben müsste. Dies ermöglicht es ferner, einem Benutzer die Datenverarbeitungsfunktionen und damit auch die Daten aller Messeinrichtungen über eine gemeinsame Schnittstelle bereitzustellen. Ein Benutzer benötigt kein Wissen darüber, mit welcher der Messeinrichtungen er interagieren will sondern kann über die Koppeleinrichtung direkt auf die gewünschten Funktionen zugreifen.

Insbesondere ermöglicht dies auch eine Erweiterung der gekoppelten Messvorrichtung um weitere Messvorrichtungen. Ein Benutzer kann dann über die Benutzerschnittstelle auf die erweiterte gekoppelte Messvorrichtung zugreifen, ohne dass weitere Konfigurationen an der gekoppelten Messvorrichtung notwendig wären.

In einer Ausführungsform weist die Messvorrichtung eine Sensorschnittstelle auf, welche dazu ausgebildet ist, Messdaten von mindestens einem Sensor zu erfassen. Dies ermöglicht es, unterschiedliche Messeinrichtungen für unterschiedliche Aufgaben auszugestalten. Beispielsweise kann eine Messvorrichtung eine Sensorschnittstelle aufweisen, welche dazu ausgebildet ist, Daten von Schalldrucksensoren aufzunehmen, eine weitere Messvorrichtung kann eine Sensorschnittstelle aufweisen, welche dazu ausgebildet ist, Daten von Beschleunigungs- oder Positionssensoren aufzunehmen.

In einer Ausführungsform weist mindestens eine der Messeinrichtungen eine Datenverarbeitungseinrichtung auf, welche dazu ausgebildet ist, Datenverarbeitungsfunktionen für die erfassten Messdaten bereitzustellen. Diese Datenverarbeitungseinrichtung kann z.B. anstelle einer Sensorschnittstelle über rechenstarke Recheneinrichtungen verfügen und die Datenverarbeitungsaufgaben stellvertretend für die weiteren Messeinrichtungen berechnen. In einer Ausführungsform weist eine Messvorrichtung eine Sensorschnittstelle und eine Datenverarbeitungseinrichtung auf.

In einer Ausführungsform weist die Messvorrichtung eine Adaptionseinrichtung auf, welche dazu ausgebildet ist, die Funktion, welche die Messvorrichtung als Komponente der Datenverarbeitungsinfrastruktur und/oder der gekoppelten Messvorrichtung für die Datenverarbeitungsinfrastruktur und/oder die gekoppelte Messvorrichtung bereitstellt gemäß den vorgegebenen Zugriffsrechten anzupassen. Dies ermöglicht es, die Berechnungen, welche in einer Messvorrichtung durchgeführt werden, auf diejenigen Berechnungen zu beschränken, auf welche der Benutzer gemäß seinen Zugriffsrechten Zugriff hat.

In einer Ausführungsform ist die zweite Steuereinrichtung dazu ausgebildet, bei Bestehen einer Kopplung der Datenverarbeitungsinfrastruktur mit einer Messvorrichtung diese Messvorrichtung intransparent als Komponente der Datenverarbeitungsinfrastruktur in diese zu integrieren. Dies ermöglicht es, eine Vielzahl von Messvorrichtungen in die Datenverarbeitungsinfrastruktur zu integrieren, ohne dass ein Benutzer einen Unterschied zwischen der Arbeit mit einer Messvorrichtungen oder der Datenverarbeitungsinfrastruktur bemerkt. Dies ermöglicht eine einheitliche Benutzung der von den Messvorrichtungen oder der Datenverarbeitungsinfrastruktur bereitgestellten Datenverarbeitungsfunktionen.

In einer Ausführungsform ist die Datenverarbeitungsinfrastruktur dazu ausgebildet, von den Messvorrichtungen erfasste Messdaten zu festgelegten Zeitpunkten abzurufen. Dies ermöglicht es, Daten z.B. in festgelegten Zeitintervallen abzurufen. Ferner können in einer Datenerfassungseinrichtung erfasste Daten in einer einmaligen Übertragung, z.B. bei niedriger Netzwerkauslastung, an die Datenverarbeitungsinfrastruktur übertragen werden. Dies ermöglicht das Bereitstellen der erfassten Daten für eine Vielzahl von Benutzern ohne ein Datennetzwerk, welches die Datenverarbeitungsinfrastruktur mit Datenerfassungseinrichtungen koppelt dauerhaft zu belasten.

Zusätzlich oder alternativ ist die Datenverarbeitungsinfrastruktur dazu ausgebildet, von den Messvorrichtungen erfasste Messdaten beim Koppeln einer der Messvorrichtungen mit der Datenverarbeitungsinfrastruktur abzurufen. Dies ermöglicht es, erfasste Daten sehr schnell in der Datenverarbeitungsinfrastruktur bereitzustellen. Ein Zugriff auf die erfassten Daten wird dadurch für eine Vielzahl von Benutzern zeitnah zu der Erfassung der Daten möglich.

In einer Ausführungsform weist die Datenverarbeitungsinfrastruktur eine Adaptionseinrichtung auf, welche dazu ausgebildet ist, für einen Benutzer den Zugriff die Datenverarbeitungsinfrastruktur gemäß vorgegebenen Zugriffsrechten anzupassen. Dies ermöglicht es einem Benutzer lediglich diejenigen Funktionen bereitzustellen, auf welche dieser Zugriff haben soll. Dies sichert einerseits Daten gegen unberechtigten Zugriff, andererseits ermöglicht dies eine übersichtliche Anzeige der verfügbaren Datenverarbeitungsfunktionen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Messvorrichtung;
- Fig. 2: ein Blockschaltbild einer Ausführungsform einer erfindungsgemäßen Datenverarbeitungsinfrastruktur;
- Fig. 3: ein Blockschaltbild einer weiteren Ausführungsform einer erfindungsgemäßen Datenverarbeitungsinfrastruktur.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In allen Figuren sind gleiche bzw. funktionsgleiche Elemente und Vorrichtungen - sofern nichts Anderes angegeben ist - mit denselben Bezugszeichen versehen worden.

### BESCHREIBUNG VON AUSFÜHRUNGSBEISPIELEN

Unter dem Begriff Messvorrichtung wird hierin ein elektronisches System verstanden, welches dazu ausgebildet ist, Messdaten von mindestens einem Sensor aufzunehmen und zu speichern. Ferner ist das elektronische System dazu ausgebildet sich mit einer Datenverarbeitungsinfrastruktur zu verbinden. Ein solches System kann beispielsweise als ein sog. "Embedded System" ausgeführt sein, welches einen Prozessor, eine Sensorschnittstelle, einen Speicher und eine Netzwerkschnittstelle aufweist. Ein solches "Embedded System" kann z.B. mit dem Betriebssystem VxWorks, Linux bzw. embedded Linux oder einem Windows-Derivat betrieben werden. Als Speicher können z.B. SD-Karten oder Festplatten, auf Grund ihrer geringen Größe insbesondere Notebook-Festplatten, zum Einsatz kommen.

Unter einer Datenverarbeitungsinfrastruktur wird im Rahmen dieser Beschreibung ein Verbund von zumindest zwei Computern aufgefasst, welcher dazu in der Lage ist, die Messdaten der Messvorrichtungen aufzunehmen und diese zu speichern bzw. entsprechend den vorgegebenen Messaufgaben weiterzuverarbeiten. Dabei kann die Datenverarbeitungsinfrastruktur einzelne Messeinrichtungen identifizieren und bei Bedarf authentisieren, bevor diese mit der Datenverarbeitungsinfrastruktur gekoppelt werden.

Unter einer Koppeleinrichtung wird eine Einrichtung verstanden, welche dazu ausgebildet ist, Messvorrichtungen oder auch die Computer der Datenverarbeitungsinfrastruktur derart miteinander zu koppeln, dass für einen Benutzer nicht ersichtlich ist, ob der Benutzer auf eine einzelne Messvorrichtung bzw. einen einzelnen Computer zugreift. Eine solche Koppelvorrichtung kann z.B. als Software-Modul des Betriebssystems der Messvorrichtung bzw. der Computer der Datenverarbeitungsinfrastruktur ausgebildet sein. Das Koppelmodul kann aber auch als Hardwaremodul ausgebildet sein, welches in Datenverbindung zwischen den Messvorrichtungen bzw. den Computern der Datenverarbeitungsinfrastruktur angeordnet wird. In solch einer Ausführungsform kann die Koppeleinrichtung z.B. als Switch oder Router mit erweiterter Funktion ausgeführt sein.

Unter einer intransparenten Kopplung wird in dieser Beschreibung eine Kopplung eines oder mehrerer elektronischer Systeme verstanden, die derart durchgeführt wird, dass für einen Benutzer nicht ersichtlich ist, ob er auf ein einziges elektronisches System oder mehrere miteinander gekoppelte elektronische Systeme, z.B. Messvorrichtungen, zugreift.

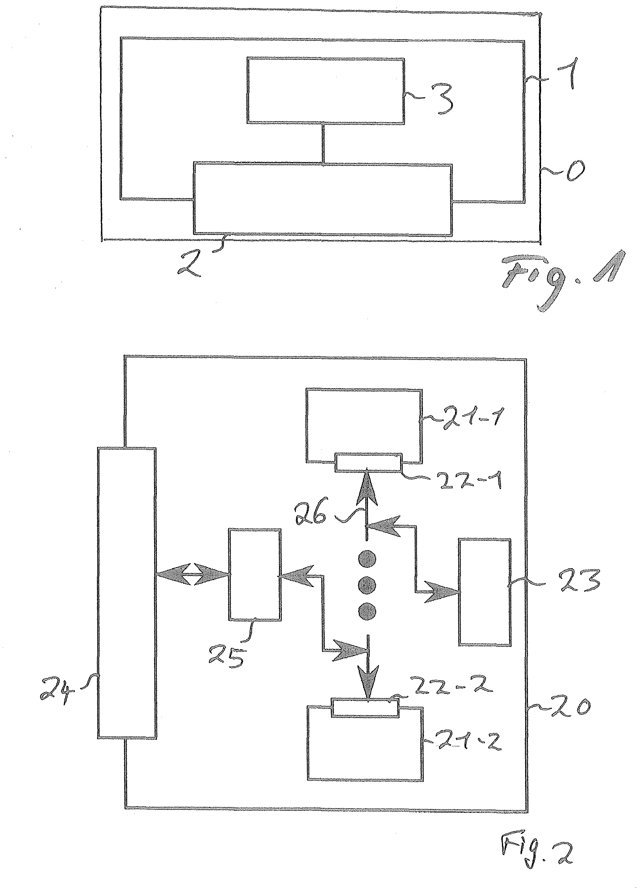

Fig. 1 zeigt ein Blockschaltbild einer Ausführungsform eines erfindungsgemäßen Messsystems 10, welches eine Messvorrichtung 1 aufweist.

Die Messvorrichtung 1 weist eine erste Netzwerkschnittstelle 2 auf, die dazu ausgebildet ist, das Messsystem 10 über z.B. ein Datennetzwerk 30 (in Fig. 1 nicht dargestellt) an eine Datenverarbeitungsinfrastruktur 20 zu koppeln. Zusätzlich oder alternativ ist die erste Netzwerkschnittstelle 2 dazu ausgebildet, die Messvorrichtung 1 mit weiteren Messvorrichtungen 1 zu koppeln.

Die erste Netzwerkschnittstelle 1 kann z.B. als drahtgebundene Schnittstelle 2, z.B. als Ethernet-Schnittstelle 2, als Lichtleiterschnittstelle 2 oder als drahtlose Schnittstelle 2, z.B. als WLAN-, WIFI-, WiMax-Schnittstelle 2 oder dergleichen, ausgebildet sein. In einer Ausführungsform überträgt die erste Netzwerkschnittstelle 2 Daten mittels des TCP/IP Protokolls.

Die Messvorrichtung 1 in Fig. 1 weist ferner eine Koppeleinrichtung 3 auf, die mit der ersten Netzwerkschnittstelle 1 gekoppelt ist. Die Koppelvorrichtung 1 ist dazu ausgebildet, die Kopplung des Messsystems 10 über die erste Netzwerkschnittstelle 2 mit einer Datenverarbeitungsinfrastruktur 20 oder die Kopplung der Messvorrichtung 1 mit weiteren Messvorrichtungen 1 durchzuführen.

Die Koppelvorrichtung 3 ist insbesondere dazu ausgebildet, die Kopplung des Messsystems 10 mit einer Datenverarbeitungsinfrastruktur 20 derart durchzuführen, dass die Messvorrichtung 1 intransparent als Komponente der Datenverarbeitungsinfrastruktur 20 mit dieser gekoppelt wird. Auf diese Weise werden sowohl die Rechenkapazität als auch der Datenspeicher der Messvorrichtung 1 bzw. die darauf gespeicherten Daten der Datenverarbeitungsinfrastruktur 20, ähnlich einer "Cloud", hinzugefügt.

Ferner ist die Koppelvorrichtung 3 dazu ausgebildet, die Kopplung der Messvorrichtung 1 mit weiteren Messvorrichtungen 1 derart vorzunehmen, dass die miteinander gekoppelten Messvorrichtungen 1 als eine einzige Messvorrichtung - eine gekoppelte Messvorrichtung 4 - erscheinen. Dabei werden ähnlich der Kopplung der Messvorrichtung 1 als Komponente der Datenverarbeitungsinfrastruktur 20 die Rechenkapazitäten sowie die Datenspeicher der einzelnen Messvorrichtungen 1 bzw. die darauf gespeicherten Daten zusammen der gekoppelten Messvorrichtung 4 bereitgestellt.

In weiteren in Fig. 1 nicht dargestellten Ausführungsformen kann die Messvorrichtung 1 ferner eine erste Steuereinrichtung 5-1 - 5-4, z.B. einen Mikroprozessor 5-1-5-4, aufweisen, welcher dazu ausgebildet ist, erfasste Messdaten von der Messvorrichtung 1 über die erste Netzwerkschnittstellt 2 an die Datenverarbeitungsinfrastruktur 20 zu übermitteln. Dabei kann der Mikroprozessor 5-1 - 5-4 dazu ausgebildet sein, die erfassten Messdaten automatisch an die Datenverarbeitungsinfrastruktur 20 zu übermitteln, wenn eine Kopplung zwischen der Messvorrichtung 1 und der Datenverarbeitungsinfrastruktur 20 besteht oder die erfassten Messdaten lediglich auf Anfrage an die Datenverarbeitungsinfrastruktur 20 zu übertragen.

In einer Ausführungsform ist der Mikroprozessor 5-1 - 5-4 ferner dazu ausgebildet, die Funktion der Koppelvorrichtung 3 auszuführen. In solch einer Ausführungsform ist die Funktion der Koppelvorrichtung 3 z.B. als Software-Komponente in einer Betriebssoftware, z.B. einem Betriebssystem, des Mikroprozessor 5-1 - 5-4 ausgeführt. Ferner kann die Funktion des Übertragens der erfassten Messdaten an die Datenverarbeitungsinfrastruktur 20 ebenfalls als Software-Modul in dem Mikroprozessor 5-1 - 5-4 ausgebildet sein.

In noch weiteren in Fig. 1 nicht dargestellten Ausführungsformen weist eine Messvorrichtung 1 ferner noch eine Sensorschnittstelle 7-1, 7-3 auf, welche die Messvorrichtung mit einer Vielzahl unterschiedlicher Sensoren 8 koppelt. Z.B. kann die Sensorschnittstelle 7-1, 7-3 analoge, digitale und optische Schnittstellen oder dergleichen aufweisen, welche mit einzelnen Sensoren 8 gekoppelt werden können.

Schließlich können in noch weiteren in Fig. 1 nicht dargestellten Ausführungsformen eine Benutzerschnittstelle 6-2, 6-4 sowie eine Adaptionsvorrichtung in der Messvorrichtung 1 vorgesehen sein. Dabei dient die Benutzerschnittstelle 6-2, 6-4 dazu, einem Benutzer 11 den Zugriff auf die Messvorrichtung 1 zu ermöglichen. Ferner dient die Benutzerschnittstelle 6-2, 6-4 aber auch dazu, den Zugriff des Benutzers 11 auf die Messvorrichtung 1 entsprechende dem Kopplungszustand der Messvorrichtung 1 anzupassen.

Ist die Messvorrichtung 1 z.B. mit einer Datenverarbeitungsinfrastruktur 20 gekoppelt, passt die Benutzerschnittstelle 6-2, 6-4 in einer Ausführungsform den Zugriff auf die Messvorrichtung 1 derart an, dass ein Benutzer Zugriff auf alle Datenverarbeitungsfunktionen und Daten der Datenverarbeitungsinfrastruktur 20 erhält. Greift ein Benutzer 11 dann tatsächlich z.B. auf eine Datenverarbeitungsfunktion der Datenverarbeitungsinfrastruktur 20 zu, so leitete die Benutzerschnittstelle 6-2, 6-4 die Anfrage des Benutzers an die Datenverarbeitungsinfrastruktur 20 weiter und zeigt dem Benutzer die von der Datenverarbeitungsinfrastruktur 20 berechneten Ergebnisse an. Dabei ist für den Benutzer nicht ersichtlich, ob die Datenverarbeitungsaufgabe von der Messvorrichtung 1 oder innerhalb der Datenverarbeitungsinfrastruktur 20 berechnet wurde.

In Kombination mit der Benutzerschnittstelle 6-2, 6-4 kann in einigen Ausführungsformen eine Adaptionsvorrichtung vorgesehen sein, die den Zugriff eines Benutzers 11 auf die Messvorrichtung 1 entsprechend den Benutzerrechten des Benutzers 11 anpasst. Dabei kann z.B. der Zugriff des Benutzers 11 zu Datenverarbeitungsfunktionen oder Daten eingeschränkt werden. Beispielsweise kann einem Benutzer lediglich Zugriff auf die Daten und Datenverarbeitungsfunktionen seiner Arbeitsgruppe gestattet werden.

Die Benutzerschnittstelle 6-2, 6-4 ist nicht als physische Benutzerschnittstelle, wie z.B. ein Touchscreen, zu verstehen. Vielmehr ist die Benutzerschnittstelle 6-2, 6-4 als Anwendungsschnittstelle oder Zugriffsschnittstelle, z.B. ein Webinterface oder App, zu verstehen. Dabei können die Funktion der Benutzerschnittstelle und die Funktion der Adaptionsvorrichtung in einer Ausführungsform zumindest teilweise als Programm-Modul in der ersten Steuereinrichtung 5-1 - 5-4 integriert sein.

In einer Ausführungsform ist die Benutzerschnittstelle 6-2, 6-4 als den Messvorrichtungen 1 übergeordnete Benutzerschnittstelle 6-2, 6-4 des Messsystems 10 ausgeführt.

Fig. 2 zeigt ein Blockschaltbild einer Ausführungsform einer erfindungsgemäßen Datenverarbeitungsinfrastruktur 20.

Die Datenverarbeitungsinfrastruktur 20 in Fig. 2 weist zwei Recheneinrichtungen 21-1 und 21-2 auf. Weitere mögliche Recheneinrichtungen sind durch drei Punkte zwischen den Recheneinrichtungen 21-1 und 21-2 angedeutet. Jeder der Recheneinrichtungen 21-1 und 21-2 weist eine zweite Netzwerkschnittstelle 22-1, 22-2 auf, die dazu ausgebildet ist, die Recheneinrichtungen 21-1 und 21-2 miteinander zu koppeln. Die zweiten Netzwerkschnittstellen 22-1, 22-2 können z.B. als drahtgebundene Schnittstellen 22-1, 22-2, z.B. als Ethernet-Schnittstellen 22-1, 22-2, als Lichtleiterschnittstellen 22-1, 22-2 oder als drahtlose Schnittstellen 22-1, 22-2, z.B. als WLAN-, WIFI-, WiMax-Schnittstellen 22-1, 22-2 oder dergleichen, ausgebildet sein. In einer Ausführungsform übertragen die zweiten Netzwerkschnittstellen 22-1, 22-2 Daten mittels des TCP/IP Protokolls. In einer Ausführungsform übertragen die zweiten Netzwerkschnittstellen 22-1, 22-2 Daten mittels der gleichen Schnittstelle und des gleichen Protokolls wie die erste Netzwerkschnittstelle 2 der Messvorrichtung 1. In einer Ausführungsform sind die Netzwerkschnittstellen 22-1, 22-2 der Recheneinrichtungen 21-1, 21-2 über ein Datennetzwerk 26 gekoppelt.

Die Recheneinrichtungen 21-1 und 21-2 können in einer Ausführungsform z.B. als Netzwerkserver 21-1 und 21-2 ausgebildet sein. In einer weiteren Ausführungsform können die einzelnen Recheneinrichtungen 21-1 und 21-2 jeweils als Servercluster 21-1 und 21-2 ausgeführt sein, die über ein Datennetzwerk 26, z.B. das Internet 26 oder ein privates Backbone-Netzwerk 26, miteinander gekoppelt sind. Dabei können die Recheneinrichtungen 21-1 und 21-2 z.B. jeweils ein Rechenzentrum einer Firma sein, die die Datenverarbeitungsinfrastruktur 20 betreibt.

Die Datenverarbeitungsinfrastruktur 20 weist ferner eine zweite Koppelvorrichtung 23 auf, die im Betrieb die Recheneinrichtungen 21-1, 21-2 intransparent miteinander koppelt, dass diese wie eine einzige Recheneinrichtung 21-1, 21-2 erscheinen, die die Datenverarbeitungsfunktionen und die Daten aller miteinander gekoppelten Recheneinrichtungen 21-1, 21-2 aufweist.

Die Datenverarbeitungsinfrastruktur 20 weist ferner eine zweite Steuereinrichtung 25 auf, die über eine Kommunikationsschnittstelle 24, das Datennetzwerk 26 der Datenverarbeitungsinfrastruktur 20 mit mindestens einem Messsystem 10 koppeln kann. Dabei ist die Steuereinrichtung 25 dazu ausgebildet, bei Koppeln der Datenverarbeitungsinfrastruktur 20 mit einer Messvorrichtung 1 des Messsystems 10 die Messvorrichtung 1 oder das Messsystem 10 zu identifizieren. Dies kann z.B. mittels einfacher Identifikationscodes erfolgen. In einer Ausführungsform ist die Steuereinrichtung 25 ferner dazu ausgebildet, die Messvorrichtung 1 bzw. das Messsystem 10 z.B. mittels kryptographischer Verfahren zu authentisieren.

Die zweite Steuereinrichtung 25 kann dabei als Server 25 ausgebildet sein. In einer Ausführungsform sind die Funktionen der Koppelvorrichtung 23 und der Steuereinrichtung 25 als Programm-Module einer Betriebssoftware, z.B. eines Betriebssystems, der Recheneinrichtungen 21-1, 21-2 ausgebildet.

Die zweite Koppelvorrichtung 23 ist in einer Ausführungsform ferner dazu ausgebildet, beim Koppeln eines Messsystems 10 bzw. einer Messvorrichtung 1 mit der Datenverarbeitungsinfrastruktur 20 dieses Messsystem 10 bzw. diese Messvorrichtung 1 ebenso, wie die einzelnen Recheneinrichtungen 21-1, 21-2, intransparent als Komponenten der Datenverarbeitungsinfrastruktur 20 in diese einzubinden. Ferner kann in einer Ausführungsform die zweite Steuereinrichtung 25 dazu ausgebildet sein, beim Koppeln einer Messvorrichtung 1 mit der Datenverarbeitungsinfrastruktur 20 Messdaten von dieser Messvorrichtung 1 abzurufen. In einer weiteren Ausführungsform ist die zweite Steuereinrichtung 25 dazu ausgebildet, Messdaten von dieser Messvorrichtung 1 in regelmäßigen Intervallen abzurufen.

In einer weiteren Ausführungsform weist die Datenverarbeitungsinfrastruktur 20 eine Datenverarbeitungseinrichtung auf, die in einer Ausführungsform als Programm-Modul in einer der Recheneinrichtungen 21-1, 21-2 angeordnet ist, auf. Die Datenverarbeitungseinrichtung ist dabei dazu ausgebildet, Datenverarbeitungsfunktionen bereitzustellen, welche z.B. Benutzer 11 auf Messdaten anwenden können.

Die Datenverarbeitungseinrichtung ist in einer Ausführungsform als Netzwerkserver ausgebildet. Insbesondere kann der Netzwerkserver ein Netzwerkserver sein, der besonders viel Rechenleitung zum Durchführen der Datenverarbeitungsfunktionen aufweist. Die Datenverarbeitungseinrichtung kann in einer Ausführungsform auch als Computer-Cluster ausgebildet sein.

Mögliche Datenverarbeitungsfunktionen, welche die Datenverarbeitungseinrichtung in der Datenverarbeitungsinfrastruktur 20 bereitstellen kann sind zum Beispiel:
- Kalibrierung
- Linearisierung von Signalen
- Filterung von Signalen
- Drehzahlverarbeitung (Pulslücken schließen, Doppelpulskorrekturen, ...)
- Integrieren oder Differenzierung (auch mehrfach)
- Schallpegelmesserfunktionen der verschiedensten Art
- Zeitreihenanalysen
- Spektralanalysen der verschiedensten Art (FFT, Wavelet, digitale Filterbänke, ...)
- Betriebsschwingungsanalyse
- Beamforming (Schallortung)
- und Weitere

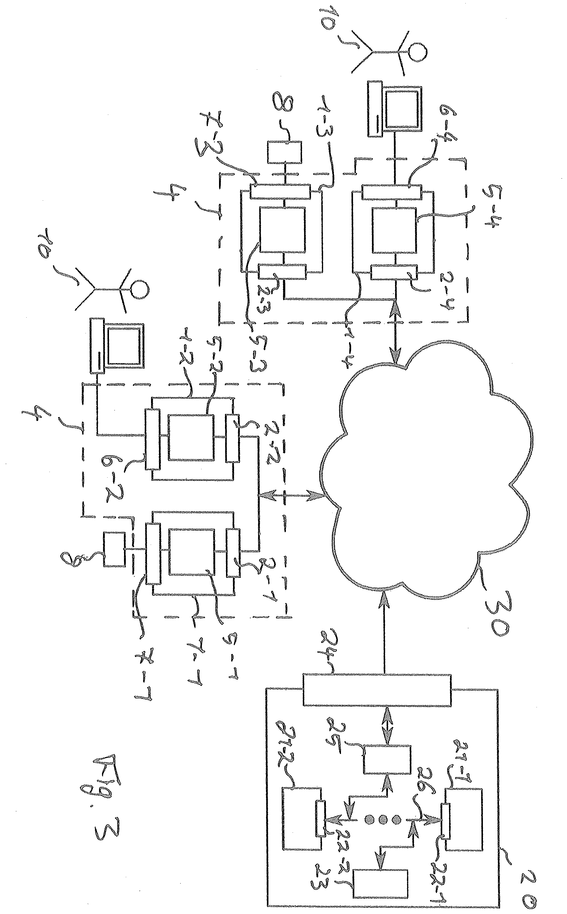

Fig. 3 zeigt ein Blockschaltbild einer weiteren Ausführungsform einer erfindungsgemäßen Datenverarbeitungsinfrastruktur 20, welche über ein öffentliches Datennetzwerk 30 mit zwei gekoppelten Messvorrichtungen 4 gekoppelt ist. Die Messsysteme in Fig. 3 bestehen jeweils aus den gekoppelten Messvorrichtungen 4. Der Übersichtlichkeit halber sind die Messsysteme nicht separat eingezeichnet.

Die Datenverarbeitungsinfrastruktur 20 entspricht dabei derjenigen Datenverarbeitungsinfrastruktur 20, welche in Bezug auf Fig. 2 beschrieben wurde.

Die gekoppelten Messvorrichtungen 4 in Fig. 3 weisen jeweils zwei einzelne Messvorrichtungen 1-1 und 1-2 sowie 1-3 und 1-4 auf. Dabei sind die einzelnen Messvorrichtungen 1-1 und 1-2 sowie 1-3 und 1-4 der gekoppelten Messvorrichtungen 4 jeweils über ein Datennetzwerk und die entsprechenden Netzwerkschnittstellen 2-1 und 2-2 sowie 2-3 und 2-4 miteinander gekoppelt.

Die Messvorrichtung 1-1 und 1-3 weisen jeweils eine erste Netzwerkschnittstelle 2-1 und 2-3, eine erste Steuereinrichtung 5-1 und 5-3 sowie eine Sensorschnittstelle 7-1 und 7-3 auf. Die Funktion der Koppelvorrichtung 3 ist in den Messvorrichtungen 1-1 und 1-3 in die Steuereinrichtungen 5-1 und 5-3 integriert. Die Sensorschnittstellen 7-1 und 7-3 sind jeweils mit einem Sensor 8 gekoppelt.

In der in Fig. 3 dargestellten Ausführungsform sind die Sensorschnittstellen 7-1 und 7-3 als analoge Sensorschnittstellen 7-1 und 7-3 ausgebildet, die mit Vibrationssensoren 8 gekoppelt sind. In weiteren Ausführungsformen sind unterschiedliche Ausgestaltungen der Sensorschnittstellen 7-1 und 7-3 möglich. Beispielsweise kann eine der Sensorschnittstellen 7-1 und 7-3 als digitale bzw. optische Sensorschnittstelle oder dergleichen ausgebildet sein.

Mögliche Sensoren 8, die mit den Sensorschnittstellen 7-1 und 7-3 gekoppelt werden können sind:
- Mikrofone
- auf binauraler Aufnahmetechnik basierende Sensoren
- Beschleunigungsaufnehmer
- Kraftsensoren
- Dehnungsmessstreifen
- Drehzahlsensoren
- Drehzahlencoder
- Drucksensoren
- Temperatursensoren
- und Weitere

Die Messvorrichtungen 1-2 und 1-4 weisen jeweils eine erste Netzwerkschnittstelle 2-2 und 2-4, eine erste Steuereinrichtung 5-2 und 5-4 sowie eine Benutzerschnittstelle 6-2 und 6-4 auf. In Fig. 3 dargestellt sind ebenfalls zwei Benutzer 11, die jeweils über einen Computer auf die Benutzerschnittstellen 6-2 und 6-4 zugreifen.

Die gekoppelten Messvorrichtungen 4 und die Datenverarbeitungsinfrastruktur 20 in Fig. 3 sind über ein öffentliches Datennetzwerk 30 miteinander gekoppelt. Das öffentliche Datennetzwerk 30 kann z.B. als das Internet ausgebildet sein. In weiteren Ausführungsformen kann das öffentliche Datennetzwerk 30 als ein Backbone-Netzwerk 30 ausgebildet sein, welches von dem Betreiber der Datenverarbeitungsinfrastruktur 20 betrieben wird.

In einer Ausführungsform können das öffentliche Datennetzwerk 30 und das Datennetzwerk 26 dasselbe Datennetzwerk 26, 30 sein.

In weiteren Ausführungsformen sind mehr oder weniger als der in Fig. 3 dargestellten Messvorrichtungen 1-1 - 1-4 möglich. Dabei können die gekoppelten Messeinrichtungen 4 z.B. unterschiedliche Anzahlen von Messeinrichtungen 1-1 - 1-4 aufweisen. In weiteren Ausführungsformen können auch mehr oder weniger als die in Fig. 3 dargestellten Messeinrichtungen 4 vorhanden sein.

Beispielsweise kann ein Fahrzeughersteller eine Flotte von PKW, z.B. 20 PKW, jeweils mit einer gekoppelten Messvorrichtung 4 ausstatten. Dabei kann jede der gekoppelten Messvorrichtungen 4 z.B. eine einzelne Messvorrichtung 1-1 - 1-4 zur Aufnahme von schwingungs- und akustischen Messwerten und eine einzelne Messvorrichtung 1-1 - 1-4 zur Aufnahme von Fahrzeugbewegungen sowie eine Vielzahl weiterer in der jeweiligen gekoppelten Messvorrichtung 4 angeordneter einzelner Messvorrichtungen 1-1 - 1-4 aufweisen.

Während einer solchen Flottenerprobung können die Entwicklungsingenieure z.B. tagsüber Messfahrten durchführen, bei welchen eine Vielzahl von Messdaten aufgenommen wird. Nachdem die Messfahrten durchgeführt wurden, können die Entwicklungsingenieure die jeweiligen gekoppelten Messvorrichtungen 4 z.B. an ein Hotelnetzwerk anschließen. Daraufhin werden die gekoppelten Messvorrichtungen 4 die erfassten Messdaten mit der Datenverarbeitungsinfrastruktur 20 des Fahrzeugherstellers synchronisieren.

Dies ermöglicht es, allen an der Flottenerprobung teilnehmenden Entwicklungsingenieuren auf eine gemeinsame Datenbasis, welche die Messdaten aller Fahrzeuge aufweist, zuzugreifen und diese auszuwerten. Ferner ermöglicht die vorliegende Erfindung z.B. den nicht an der Flottenerprobung teilnehmenden Entwicklungsingenieuren bereits frühzeitig auf Messdaten zuzugreifen, welche während der Flottenerprobung erfasst wurden.

Die erfindungsgemäße Adaptionsvorrichtung ermöglicht es dabei ferner, den Zugriff jedes einzelnen Entwicklungsingenieurs auf die Datenverarbeitungsinfrastruktur 20 derart anzupassen, das jeder Entwicklungsingenieur nur diejenigen Messdaten bearbeiten kann, die seinem Aufgabengebiet entsprechen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### BEZUGSZEICHENLISTE

- 1, 1-1 - 1-4: Messvorrichtung
- 2, 2-1 - 2-4: Netzwerkschnittstelle
- 3: Koppeleinrichtung
- 4: gekoppelte Messvorrichtung
- 5-1 - 5-4: Steuereinrichtung
- 6-2, 6-4: Benutzerschnittstelle
- 7-1, 7-3: Sensorschnittstelle
- 8: Sensor
- 10: Messsystem
- 11: Benutzer
- 20: Datenverarbeitungsinfrastruktur
- 21-1, 21-2: Recheneinrichtungen
- 22-1, 22-2: Netzwerkschnittstelle
- 23: Koppeleinrichtung
- 24: Kommunikationsschnittstelle
- 25: Steuereinrichtung
- 26: Datennetzwerk
- 30: Datennetzwerk

## Patentansprüche

1. Messsystem (10) zum Erfassen von Messdaten, insbesondere zum Erfassen von Messdaten in einem Fahrzeug,
mit einer Messvorrichtung (1; 1-1 - 1-4), welche aufweist:
eine Benutzerschnittstelle (6-2, 6-4), welche dazu ausgebildet ist, einem Benutzer einen Zugriff auf die Messvorrichtung (1; 1-1 - 1-4) bereitzustellen; und
eine erste Netzwerkschnittstelle (2), welche zumindest dazu ausgebildet ist, das Messsystem (10) mit einer Datenverarbeitungsinfrastruktur (20) zu koppeln, und
eine erste Koppeleinrichtung (3), welche dazu ausgebildet ist, das Messsystem (10) bei Bestehen einer Kopplung mit der Datenverarbeitungsinfrastruktur (20) derart als Komponente der Datenverarbeitungsinfrastruktur (20) an diese zu koppeln und/oder die Messvorrichtung (1; 1-1 - 1-4) über die erste Netzwerkschnittstelle (2) mit einer weiteren Messvorrichtung (1; 1-1 - 1-4) derart zu einer einzelnen gekoppelten Messvorrichtung (4) zu koppeln, dass es für einen Benutzer beim Zugriff auf die Messvorrichtung über die Benutzerschnittstelle (6-2, 6-4) nicht ersichtlich ist, ob er auf ein einziges System oder mehrere gekoppelte elektronische Systeme zugreift,
**dadurch gekennzeichnet, dass** die Messvorrichtung (1; 1-1 - 1-4) dazu ausgelegt ist, sich dynamisch mit der Datenverarbeitungsinfrastruktur (20) zu verbinden oder zu lösen.

2. Messsystem nach Anspruch 1,
**dadurch gekennzeichnet,**
**dass** die Messvorrichtung (1; 1-1 - 1-4) eine erste Steuereinrichtung (5-1 - 5-4) aufweist, welche dazu ausgebildet ist, erfasste Messdaten im Falle einer Kopplung mit der Datenverarbeitungsinfrastruktur (20) automatisch an die Datenverarbeitungsinfrastruktur (20) zu übermitteln.

3. Messsystem nach einem der vorherigen Ansprüche,
**dadurch gekennzeichnet,**
**dass** die Messvorrichtung (1; 1-1 - 1-4) eine erste Steuereinrichtung (5-1 - 5-4) aufweist, welche dazu ausgebildet ist, im Falle einer Kopplung mit der Datenverarbeitungsinfrastruktur (20) die erfassten Messdaten als Antwort auf eine Anfrage der Datenverarbeitungsinfrastruktur (20) an die Datenverarbeitungsinfrastruktur (20) zu übermitteln.

4. Messsystem nach einem der vorherigen Ansprüche,
**dadurch gekennzeichnet,**
**dass** die Benutzerschnittstelle (6-2,6-4) dazu ausgebildet ist:
- einem Benutzer einen Zugriff auf Datenverarbeitungsfunktionen der Messvorrichtung (1; 1-1 - 1-4) bereitzustellen, wobei die dem Benutzer bereitgestellten Datenverarbeitungsfunktionen mindestens eine Untermenge einer Menge von Datenverarbeitungsfunktionen darstellen, welche die Datenverarbeitungsinfrastruktur (20) dem Benutzer bereitstellt; und/oder
- einem Benutzer im Falle einer Kopplung mit der Datenverarbeitungsinfrastruktur (20) einen Zugriff auf alle Datenverarbeitungsfunktionen bereitzustellen, welche die Datenverarbeitungsinfrastruktur (20) dem Benutzer bereitstellt; und/oder
- für diejenigen Datenverarbeitungsfunktionen, welche nicht direkt auf der Messvorrichtung (1; 1-1 - 1-4) bereitgestellt werden, die Anfrage des Benutzers an die Datenverarbeitungsinfrastruktur (20) weiterzuleiten und die Ergebnisse der entsprechenden Datenverarbeitungsfunktionen von der Datenverarbeitungsinfrastruktur (20) zu erhalten und an den Benutzer weiterzuleiten; und/oder- bei Kopplung der Messvorrichtung (1; 1-1 - 1-4) mit mindestens einer weiteren Messvorrichtung (1; 1-1 - 1-4) in der gekoppelten Messvorrichtung (4), einem Benutzer Zugriff auf alle durch die in der gekoppelten Messvorrichtung (4) gekoppelten Messvorrichtungen (1; 1-1
- 1-4) bereitgestellten Datenverarbeitungsfunktionen bereitzustellen.

5. Messsystem nach einem der vorherigen Ansprüche,
**dadurch gekennzeichnet,**
**dass** die Messvorrichtung (1; 1-1 - 1-4) zumindest einen Sensor (8) zum Erfassen jeweiliger Messdaten und eine Sensorschnittstelle (7-1,7-3) zum Aufnehmen der über die Sensoren (8) erfassten aufweist.

6. Messsystem nach einem der vorherigen Ansprüche,
**dadurch gekennzeichnet,**
**dass** die Messvorrichtung (1; 1-1 - 1-4) eine erste Datenverarbeitungseinrichtung aufweist, welche dazu ausgebildet ist, die Datenverarbeitungsfunktionen für die erfassten Messdaten bereitzustellen.

7. Messsystem nach einem der vorherigen Patentansprüche **dadurch gekennzeichnet,**
**dass** die Messvorrichtung (1; 1-1 - 1-4) eine Adaptionseinrichtung aufweist, welche dazu ausgebildet ist, den Zugriff auf die Messvorrichtung (1; 1-1 - 1-4) gemäß vorgegebenen Zugriffsrechten anzupassen.

8. Messsystem nach Anspruch 7,
**dadurch gekennzeichnet,**
**dass** die Adaptionseinrichtung dazu ausgebildet ist, die Funktion, welche die Messvorrichtung (1; 1-1 - 1-4) als Komponente der Datenverarbeitungsinfrastruktur (20) und/oder der gekoppelten Messvorrichtung (4) für die Datenverarbeitungsinfrastruktur (20) und/oder die gekoppelte Messvorrichtung (4) bereitstellt gemäß den vorgegebenen Zugriffsrechten anzupassen.

9. Datenverarbeitungssystem, mit:
mindestens einem Messsystem nach einem der vorherigen Patentansprüche; und
einer Datenverarbeitungsinfrastruktur (20), mit einem Datennetzwerk (26), wobei das Datennetzwerk (26) umfasst:
mindestens zwei Recheneinrichtungen (21-1, 21-2), welche jeweils eine zweite Netzwerkschnittstelle (22-1, 22-2) aufweisen, wobei die zweite Netzwerkschnittstelle (22-1,22-2) dazu ausgebildet ist, die Recheneinrichtungen (21-1,21-2) miteinander zu koppeln,
eine zweite Koppeleinrichtung (23), welche dazu ausgebildet ist, die Recheneinrichtungen (21-1,21-2) zu einer gekoppelten Recheneinrichtung zu koppeln,
eine Kommunikationsschnittstelle (24), welche dazu ausgebildet ist, das Datennetzwerk (26) mit dem, mindestens einem Messsystem (10) zu koppeln, und
eine zweite Steuereinrichtung (25), welche dazu ausgebildet ist, beim Koppeln eines Messsystems (10) mit der Datenverarbeitungsinfrastruktur (20) das Messsystems (10) automatisch zu identifizieren und/oder zu authentisieren.

10. Datenverarbeitungssystem nach Anspruch 9,
**dadurch gekennzeichnet,**
**dass** die zweite Koppeleinrichtung (23) dazu ausgebildet ist, im Falle einer Kopplung der Datenverarbeitungsinfrastruktur (20) mit einem Messsystem (10) dieses Messsystems (10) als Komponente der Datenverarbeitungsinfrastruktur (20) in diese zu integrieren.

11. Datenverarbeitungssystem nach einem der Ansprüche 9 und 10,
**dadurch gekennzeichnet,**
**dass** die Datenverarbeitungsinfrastruktur (20) dazu ausgebildet ist, von dem Messsystem (10) erfasste Messdaten zu festgelegten Zeitpunkten abzurufen.

12. Datenverarbeitungssystem nach einem der Ansprüche 9 bis 11,
**dadurch gekennzeichnet,**
**dass** die Datenverarbeitungsinfrastruktur (20) dazu ausgebildet ist, von dem Messsystem (10) erfasste Messdaten beim Koppeln eines Messsystems (10) mit der Datenverarbeitungsinfrastruktur (20) von der jeweiligen Messvorrichtung (1; 1-1 - 1-4) automatisch abzurufen.

13. Datenverarbeitungssystem nach einem der Ansprüche 9 bis 12,
wobei die Datenverarbeitungsinfrastruktur mindestens eine zweite Datenverarbeitungseinrichtung umfasst, welche dazu ausgebildet ist, Datenverarbeitungsfunktionen für die erfassten Messdaten bereitzustellen.

14. Datenverarbeitungssystem nach einem der Ansprüche 9 bis 13,
wobei die Datenverarbeitungsinfrastruktur eine zweite Adaptionseinrichtung umfasst, welche dazu ausgebildet ist, für einen Benutzer den Zugriff auf die Datenverarbeitungsinfrastruktur (20) gemäß vorgegebenen Zugriffsrechten anzupassen.

## Claims

1. Measuring system (10) for capturing measurement data, in particular for capturing measurement data in a vehicle, comprising a measuring device (1; 1-1 - 1-14), which has:
a user interface (6-2, 6-4) formed to provide a user with access to the measuring device (1; 1-1 - 1-4); and
a first network interface (2) at least formed to couple the measuring system (10) to a data processing infrastructure (20); and
a first coupling device (3) formed, when a coupling to the data processing infrastructure (20) is present, to couple the measuring system (10) to the data processing infrastructure (20) as a component thereof and/or to couple the measuring device (1; 1-1 - 1-4) to a further measuring device (1; 1-1 - 1-4) via the first network interface (2) to form a single, coupled measuring device (4), in such a way that it is not apparent to a user, upon access to the measuring device via the user interface (6-2, 6-4), whether he is accessing a single system or a plurality of coupled electronic systems,
**characterized in that** the measuring device (1; 1-1 - 1-4) is configured to be dynamically connected to or detached from the data processing infrastructure (20).

2. Measuring system according to claim 1,
**characterized**
**in that** the measuring device (1; 1-1 - 1-4) has a first control device (5-1 - 5-4) formed to convey captured measurement data to the data processing infrastructure (20) automatically in the case of a coupling to the data processing infrastructure (20).

3. Measuring system according to any of the preceding claims,
**characterized**
**in that** the measuring device (1; 1-1 - 1-4) has a first control device (5-1 - 5-4) formed, in the case of a coupling to the data processing infrastructure (20), to convey the captured measurement data to the data processing infrastructure (20) as a response to a query from the data processing infrastructure (20).

4. Measuring system according to any of the preceding claims,
**characterized**
**in that** the user interface (6-2, 6-4) is formed:
- to provide a user with access to data processing functions of the measuring device (1; 1-1 - 1-4), the data processing functions provided to the user representing at least a subset of a set of data processing functions which the data processing infrastructure (20) provides to the user; and/or
- in the case of a coupling to the data processing infrastructure (20), to provide a user with access to all data processing functions which the data processing infrastructure (20) provides to the user; and/or
- for those data processing functions which are not provided directly on the measuring device (1; 1-1 - 1-4), to pass on the user query to the data processing infrastructure (20) and to obtain the results of the corresponding data processing functions from the data processing infrastructure (20) and pass them on to the user; and/or
- if the measuring device (1; 1-1 - 1-4) is coupled to at least one further measuring device (1; 1-1 - 1-4) in the coupled measuring device (4), to provide a user with access to all data processing functions provided by the measuring devices (1; 1-1 - 1-4) coupled in the coupled measuring device (4) .

5. Measuring system according to any of the preceding claims,
**characterized**
**in that** the measuring device (1; 1-1 - 1-4) has at least one sensor (8) for capturing associated measurement data and a sensor interface (7-1, 7-3) for receiving the data captured by way of the sensors (8).

6. Measuring system according to any of the preceding claims,
**characterized**
**in that** the measuring device (1; 1-1 - 1-4) has a first data processing device formed to provide the data processing functions for the captured measurement data.

7. Measuring system according to any of the preceding claims,
**characterized**
**in that** the measuring device (1; 1-1 - 1-4) has an adaptation device formed to adjust the access to the measuring device (1; 1-1 - 1-4) in accordance with predetermined access rights.

8. Measuring system according to claim 7,
**characterized**
**in that** the adaptation device is formed to adjust the function, provided by the measuring device (1; 1-1 - 1-4) for the data processing infrastructure (20) and/or the coupled measuring device (4) as a component of the data processing infrastructure (20) and/or the coupled measuring device (4), in accordance with the predetermined access rights.

9. Data processing system, comprising:
at least one measuring system according to any of the preceding claims; and
a data processing infrastructure (20), comprising a data network (26), the data network (26) comprising:
at least two computation devices (21-1, 21-2), which each have a second network interface (22-1, 22-2), the second network interface (22-1, 22-2) being formed to couple the computation devices (21-1, 21-2) to one another,
a second coupling device (23) formed to couple the computation devices (21-1, 21-2) to a coupled computation device,
a communication interface (24) formed to couple the data network (26) to the at least one measuring system (10), and
a second control device (25) formed to identify and/or authenticate a measuring system (10) automatically when the measuring system (10) is coupled to the data processing infrastructure (20).

10. Data processing system according to claim 9,
**characterized**
**in that** the second coupling device (23) is formed, in the case of a coupling of the data processing infrastructure (20) to a measuring system (10), to integrate this measuring system (10) into the data processing infrastructure (20) as a component thereof.

11. Data processing system according to either claim 9 or claim 10,
**characterized**
**in that** the data processing infrastructure (20) is formed to call up measurement data, captured by the measuring system (10), at fixed points in time.

12. Data processing system according to any of claims 9 to 11,
**characterized**
**in that** the data processing infrastructure (20) is formed to call up measurement data, captured by a measuring system (10), from the associated measuring device (1; 1-1 - 1-4) automatically when the measuring system (10) is coupled to the data processing infrastructure (20).

13. Data processing system according to any of claims 9 to 12,
wherein the data processing infrastructure comprises at least a second data processing device formed to provide data processing functions for the captured measurement data.

14. Data processing system according to any of claims 9 to 13,
wherein the data processing infrastructure comprises a second adaptation device, formed to adjust the access to the data processing infrastructure (20) for a user in accordance with predetermined access rights.

## Revendications

1. System de mesure (10) destiné à acquérir des données de mesure, notamment à acquérir des données de mesure dans un véhicule,
comportant un dispositif de mesure (1 ; 1-1 - 1-4) qui comporte :
une interface d'utilisateur (6-2, 6-4) qui est réalisée de manière à ce que l'utilisateur puisse accéder au dispositif de mesure (1 ; 1-1 - 1-4); et
une première interface de réseau (2) qui est au moins réalisée de manière à ce qu'elle couple le système de mesure (10) à une infrastructure de traitement de données (20), et
un premier organe de couplage (3) qui est réalisé de manière à ce que le système de mesure (10), lorsqu'il est couplé à l'infrastructure de traitement de données (20), soit couplé à l'infrastructure de traitement de données (20) de manière à en être en composant et/ou à ce que le dispositif de mesure (1 ; 1-1 - 1-4) soit couplé, à travers la première interface de réseau (2), à un autre dispositif de mesure (1 ; 1-1 - 1-4) avec lequel il forme un seul dispositif de mesure couplé (4), faisant en sorte qu'un utilisateur qui accède audit dispositif de mesure à travers l'interface d'utilisateur (6-2, 6-4) ne puisse savoir s'il accède un système unique ou à plusieurs systèmes électroniques couplés,
**caractérisé en ce**
**que** le dispositif de mesure (1 ; 1-1 - 1-4) est conçu pour se connecter à l'infrastructure de traitement de données (20) ou s'en déconnecter, de manière dynamique.

2. Système de mesure selon la revendication 1,
**caractérisé en ce**
**que** le dispositif de mesure (1 ; 1-1 - 1-4) comporte un premier organe de commande (5-1 - 5-4) qui est réalisé de manière à ce qu'il transmette automatiquement, s'il est couplé à l'infrastructure de traitement de données (20), des données de mesure, suite à leur acquisition, à l'infrastructure de traitement de données (20).

3. Système de mesure selon l'une des revendications précédentes,
que caractérisé en ce
le dispositif de mesure (1 ; 1-1 - 1-4) comporte un premier organe de commande (5-1 - 5-4) qui est réalisé de manière à ce qu'il transmette, s'il est couplé à l'infrastructure de traitement de données (20), les données de mesure, suite à leur acquisition, à l'infrastructure de traitement de données (20) en réaction à une demande émanant de l'infrastructure de traitement de données (20).

4. Système de mesure selon l'une des revendications précédentes,
**caractérisé en ce**
**que** l'interface d'utilisateur (6-2, 6-4) est réalisée de manière à ce que :
- un utilisateur puisse accéder à des fonctionnalités de traitement de données du dispositif de mesure (1 ; 1-1 - 1-4), les fonctionnalités de traitement de données lesquelles sont mises à disposition dudit utilisateur correspondant au moins à un sous-ensemble d'un ensemble de fonctionnalités de traitement de données lesquelles sont mises à disposition dudit utilisateur par l'infrastructure de traitement de données (20) ; et/ou
- en cas d'un couplage à l'infrastructure de traitement de données (20), un utilisateur puisse accéder à toutes les fonctionnalités de traitement de données lesquelles sont mises à disposition dudit utilisateur par l'infrastructure de traitement de données (20) ; et/ou
- pour les fonctionnalités de traitement de données lesquelles ne sont pas mises à disposition directement sur le dispositif de mesure (1 ; 1-4 - 1 -4), la demande émanant de l'utilisateur soit transférée à l'infrastructure de traitement de données (20) et les résultats des fonctionnalités de traitement de données correspondantes soient reçus par l'infrastructure de traitement de données (20) puis transférés à l'utilisateur; et/ou,
- si le dispositif de mesure (1 ; 1-1 - 1-4) est couplé à au moins un autre dispositif de mesure (1 ; 1-1 - 1-4) au sein du dispositif de mesure couplé (4), un utilisateur puisse accéder à toutes les fonctionnalités de traitement de données lesquelles sont mises à disposition par les dispositifs de mesure (1 ; 1-1 - 1-4) couplés au sein du dispositif de mesure couplé (4).

5. Système de mesure selon l'une des revendications précédentes,
**caractérisé en ce**
**que** le dispositif de mesure (1 ; 1-1 - 1-4) comporte au moins un capteur (8) destiné à acquérir les données de mesure concernées et une interface de capteur (7-1,7-3) destinée à enregistrer ce qui a été acquis par l'intermédiaire des capteur (8).

6. Système de mesure selon l'une des revendications précédentes,
**caractérisé en ce**
**que** le dispositif de mesure (1 ; 1-1 - 1-4) comporte un premier organe de traitement de données qui est conçu pour fournir les fonctionnalités de traitement de données destinées aux données de mesure acquises.

7. Système de mesure selon l'une des revendications précédentes,
**caractérisé en ce**
**que** le dispositif de mesure (1 ; 1-1 - 1-4) comporte un organe d'adaptation qui est conçu pour adapter l'accès au dispositif de mesure (1 ; 1-1 - 1-4) selon des droits d'accès prédéfinis.

8. Système de mesure selon la revendication 7,
**caractérisé en ce**
**que** ledit organe d'adaptation est conçu pour adapter la fonctionnalité, qui est mise à disposition de l'infrastructure de traitement de données (20) et/ou du dispositif de mesure (4) couplé par le dispositif de mesure (1 ; 1-1 - 1-4) en tant que composant de l'infrastructure de traitement de données (20) et/ou du dispositif de mesure (4), selon les droits d'accès prédéfinis.

9. Système de traitement de données, pourvu :
d'au moins un système de mesure selon l'une des revendications précédentes ; et
d'une infrastructure de traitement de données (20), d'un réseau de données (26), le réseau de données (26) comprenant :
au moins deux organes de calcul (21-1, 21-2) qui comportent chacun une deuxième interface de réseau (22-1, 22-2), la deuxième interface de réseau (22-1, 22-2) étant conçue pour coupler les organes de calcul (21-1, 21-2) les uns aux autres,
un deuxième organe de couplage (23) qui est conçu pour coupler les organes de calcul (21-1, 21-2) de manière à ce qu'ils forment un organe de calcul couplé,
une interface de communication (24) qui est conçue pour coupler le réseau de données (26) à l'au moins un système de mesure (10), et
un deuxième organe de commande (25) qui est conçu pour effectuer automatiquement, lors du couplage d'un système de mesure (10) à l'infrastructure de traitement de données (20), une identification et/ou authentification du système de mesure (10).

10. Système de traitement de données selon la revendication 9,
**caractérisé en ce**
**que** le deuxième organe de couplage (23) est conçu pour intégrer, dans le cas d'un couplage de l'infrastructure de traitement de données (20) à un système de mesure (10), ce système de mesure (10) dans l'infrastructure de traitement de données (20) de manière à ce qu'il en constitue un composant.

11. Système de traitement de données selon l'une des revendications 9 et 10,
**caractérisé en ce**
**que** l'infrastructure de traitement de données (20) est conçue pour demander, à des moments prédéfinis, des données de mesure acquises par le système de mesure (10).

12. Système de traitement de données selon l'une des revendications 9 à 11,
**caractérisé en ce**
**que** l'infrastructure de traitement de données (20) est conçue pour demander automatiquement, lorsqu'un système de mesure (10) est couplé à l'infrastructure de traitement de données (20), des données de mesure acquises par le système de mesure (10), en s'adressant au dispositif de mesure (1; 1-1 - 1-4) concerné.

13. Système de traitement de données selon l'une des revendications 9 à 12,
ladite infrastructure de traitement de données comprenant au moins un deuxième organe de traitement de données qui est conçu pour mettre à disposition des fonctionnalités de traitement de données pour les données de mesure acquises.

14. Système de traitement de données selon l'une des revendications 9 à 13,
ladite infrastructure de traitement de données comprenant un deuxième organe d'adaptation qui est conçu pour adapter, selon des droits d'accès prédéfinis, l'accès dont un utilisateur dispose vis-à-vis de la l'infrastructure de traitement de données (20).
